# EUROPÄISCHE PATENTSCHRIFT

(11) **EP 0 538 719 B1**
(45) Veröffentlichungstag und Bekanntmachung des Hinweises auf die Patenterteilung: **10.04.1996**
(21) Anmeldenummer: 92117511.3
(22) Anmeldetag: 14.10.1992
(51) Int. Cl.: B05D 7/16, B05D 7/00

(54) **Verfahren zur Mehrschichtlackierung**
Process for making multilayers coating
Procédé pour fabriquer des revêtements multicouches

(30) Priorität: 17.10.1991 DE 4134290
(43) Veröffentlichungstag der Anmeldung: 28.04.1993
(73) Patentinhaber: Herberts Gesellschaft mit beschränkter Haftung, D-42285 Wuppertal (DE)
(72) Erfinder: Gräf, Kurt, W-4320 Hattingen (DE); Patzschke, Hans-Peter, Dr., W-5600 Wuppertal (DE); Saatweber, Dietrich, Dr., W-5600 Wuppertal (DE); Schreiber, Peter, Dr., W-4320 Hattingen (DE)
(74) Vertreter: Türk, Gille, Hrabal, Leifert

(56) Entgegenhaltungen:
- EP-A- 0 126 498
- DE-A- 3 630 667
- FR-A- 2 511 617
- Organic Coatings: Science and Technology, Vol. II, John Wiley & Sons, Inc. New York, Seiten 196, 221 und 222

## Beschreibung

Die Erfindung betrifft ein Verfahren zur Mehrschichtlackierung verschiedener Substrate, bei dem z. B. eine Grundierungsschicht, gegebenenfalls eine Füllerschicht mit einem Decklack, oder eine Lackschicht aus einem Basislack und nach Ablüften, Trocknen oder Einbrennen eine Klarlackschicht aufgetragen wird, worauf gegebenenfalls nach weiterem Ablüften eingebrannt wird. Das Verfahren eignet sich beispielsweise für Lackierungen auf dem Kraftfahrzeugsektor.

Der Aufbau von Mehrschichtlackierungen ist insbesondere bei der Kraftfahrzeuglackierung bekannt. Dabei wird eine Klarlackschicht auf eine Basislackschicht nach Erwärmen auf Temperaturen bis etwa 160°C, trocken oder nach kurzem Ablüften bei Raumtemperatur naß-in-naß aufgebracht. Besteht der Klarlack aus einem Melaminharz enthaltenden Einkomponenten-System, so erfolgt ein gemeinsames Einbrennen von Basislackschicht und Klarlackschicht. Setzt man, beispielsweise für Kraftfahrzeugreparaturzwecke Zweikomponenten-Klarlacke ein, so kann auch bei Raumtemperatur gehärtet werden. Zur Herstellung der Basislackschicht können sowohl konventionell in organische Lösemitteln gelöste, sowie auch wäßrige anionische oder kationische Basislacke (Basecoats) eingesetzt werden. In der Praxis werden heute die wäßrigen Basislackschichten mit nichtwäßrigen Klarlacken beschichtet, die jedoch hohe Lösemittelgehalte an die Umluft abgeben.

In der veröffentlichten DE-A 38 32 826 und der veröffentlichten DE-A 38 34 738 werden auch wäßrige Klarlacküberzüge beschrieben, die für derartige Lackierungen geeignet sein sollen. Die Wasserlöslichkeit wird durch Neutralisation von Carboxylgruppen der als Bindemittel verwendeten Polyacrylatharze erhalten. Diese Systeme haben den Nachteil, daß sie Amine an die Luft abgeben. Gleichzeitig beeinträchtigen die im Film vorhandenen Aminreste die für die Filmvernetzung notwendige saure Katalyse, wodurch die Schwitzwasserbeständigkeit beeinträchtigt wird.

In der DE-OS 38 03 522 wird auf eine Schicht aus einem wasserverdünnbaren Basislack eine transparente Deckschichtzusammensetzung vom organischen Lösemitteltyp aufgebracht, wobei der Basislack aus einem anionischen Acrylatharz in Kombination mit einem Melaminharz besteht. Der transparente Decklack kann Aminoalkydharze, Acrylatharze, Aminoacrylatharze, ölfreie aminogruppenhaltige Alkydharze und Urethanharze enthalten. Beispiele für wasserverdünnbare Systeme sind nicht angegeben.

In EP-A-0 126 498 wird ein Verfahren zum Korrosionsschutz von Metallen vorgestellt. Dabei wird auf einer Metalloberfläche zunächst eine Phosphatschicht erzeugt und dann wird mittels einer wäßrigen Lösung oder Dispersion eines kationischen Kunstharzes stromlos eine Deckschicht aufgebracht und eingebrannt.

Gemäß Organic Coatings: Science and Technology, Vol. II, Seite 222, werden kationische Deckschichten zur Vermeidung des "iron-staining Problems" durch kathodische Abscheidung aufgebracht.

Aufgabe der Erfindung ist die Bereitstellung eines Lacksystems zur Herstellung äußerster Lackschichten, wie eines Decklack- oder Klarlacksystems, das in der Praxis zur Herstellung von Mehrschichtaufbauten geeignet ist und das zu keinen Umweltproblemen führt.

Überraschenderweise hat es sich gezeigt, daß diese Aufgabe gelöst werden kann durch Verwendung eines Lacks auf der Basis eines kationischen Bindemittels, zur Herstellung der Decklack- oder Klarlackschichten bei einem Mehrschichtaufbau.

Gegenstand der Erfindung ist daher ein Verfahren zur Mehrschichtlackierung eines Substrats, das dadurch gekennzeichnet ist, daß als äußerste Schicht eine Schicht auf der Basis eines Lackes mit einem oder mehreren kationischen Bindemitteln verwendet wird.

Die äußerste Schicht kann ein pigment- und/oder füllstoffhaltiger Decklack oder ein transparenter Klarlack sein.

Bevorzugt ist der kationische Bindemittel enthaltende Lack auf wäßriger Basis.

Die Decklackschicht kann zum Mehrschichtaufbau auf eine Grundierungsschicht und/oder eine Füllerschicht aufgetragen werden.

Gemäß einer bevorzugten Ausführungsform betrifft die Erfindung ein Verfahren zur Mehrschichtlackierung durch Auftrag einer Basislackschicht auf ein zu lackierendes Substrat, Ablüften, Trocknen oder Einbrennen der Basislackschicht und Auftrag einer Schicht aus einem transparenten Klarlack, worauf gegebenenfalls nach Ablüften bei erhöhter Temperatur gehärtet wird, wobei ein Klarlack auf der Basis eines kationischen Bindemittels aufgetragen wird. Bevorzugt wird der Klarlack auf der Basis eines kationischen Bindemittels auf wäßriger Basis aufgetragen.

In der DE-OS 34 36 346 werden Kombinationen aus Aminoacrylatharzen beschrieben, die mit blockierten Polyisocyanaten, Umesterungsvernetzern und Formaldehyd-Kondensationsharzen thermisch vernetzt werden und als elektrophoretisch abscheidbare Einschicht-Lackierungen für elektrisch leitfähige Substrate verwendet werden. Die Verwendung derartiger kationischer Kombinationen für Mehrschichtaufbauten wird nicht angesprochen.

Gemäß einer bevorzugten Ausführungsform wird erfindungsgemäß ein Lack eingesetzt auf der Basis eines vollständig oder teilweise neutralisierten kationischen Poly(meth)acrylat-, Polyester-, Polyurethan- und/oder Polyurethanharnstoff-Harzes und eines Vernetzers auf der Basis eines Amin-Formaldehyd-Kondensationsharzes und/oder blockierten Polyisocyanats

Als kationisches Poly(meth)acrylat-, Polyester-, Polyurethan- und/oder Polyurethanharnstoff-Harz kann beispielsweise eines mit einem Zahlenmittel der Molmasse (Mn) von 1000 bis 100000, einer OH-Zahl von 0 bis 450, einer Aminzahl von 20 bis 200 und einer Glasübergangstemperatur von -50° bis +150°C verwendet werden.

Im folgenden werden die Harzkomponente (Poly(meth)acrylat, Polyester, Polyurethan, Polyurethanharnstoff) als Komponente A und der Vernetzer als Komponente B bezeichnet.

Gemäß einer bevorzugten Ausführungsform handelt es sich bei der erfindungsgemäß im Lack eingesetzen Komponente A) um ein Poly(meth)acrylat-Harz, das basische Gruppen aufweist, die durch mindestens teilweise Neutralisation ionische Salze bilden, z.B. Kationen bildende Gruppen.

Das basische Gruppen enthaltende Poly(meth)acrylatharz der Komponente A) wird durch Lösungspolymerisation oder durch Emulsionspolymerisation bzw. -copolymerisation hergestellt und hat eine Hydroxylzahl von 60 bis 200, bevorzugt 80 bis 175 mg KOH pro g Festharz. Die zahlenmittlere Molmasse (Mn) liegt bei 1000 bis 100.000 und bevorzugt bei 4000 bis 50.000 (gemessen durch Gelpermeationschromatographie, geeicht mit Polystyrolfraktionen). (Seine Viskosität beträgt bevorzugt 0,1 bis 10 Pa.s, insbesondere 0,5 bis 5 Pa.s in 50%iger Lösung in Monogylkolethern (insbesondere Ethoxypropanol) bei 25°C.) Seine Glasübergangstemperatur (errechnet aus den Glasübergangstemperaturen der Homopolymerisate) liegt bei -50 bis +150°C, bevorzugt bei -20 bis +75°C. Die geeigneten mittleren Molmassen bzw. Viskositäten können auch dadurch erhalten werden, daß Harze mit höherer und niedrigerer Molmasse bzw. Viskosität vermischt werden. Die Aminzahl liegt bei 20 bis 200, bevorzugt bei 30 bis 150 und besonders bevorzugt bei 40 bis 100 (mg KOH pro g Festharz).

Die basische Gruppen enthaltenden Poly(meth)acrylatharze (Komponente A)) können nach dem Stand der Technik, wie er beispielsweise in der DE-A 15 46 854, der DE-A 23 25 177 oder der DE-A 23 57 152 beschrieben wird, hergestellt werden. Einsetzbare ethylenisch ungesättigte Monomere sind praktisch alle radikalisch polymerisierbaren Monomeren, wobei jedoch die üblichen Einschränkungen für Copolymerisationen gelten, die durch das Q- und e-Schema nach Alfrey und Price, bzw. durch die Copolymerisationsparameter vorgegeben sind (vgl. Brandrup und Immergut, Polymer Handbuch, 2nd edition, John Wiley and Sons, New York 1975). Das basische Poly(meth)acrylatharz kann neben den Aminogruppen auch Oniumgruppen, wie quaternäre Ammoniumgruppen, Sulfonium- oder Phosphoniumgruppen enthalten. Besonders bevorzugt werden Aminogruppen, die das Harz nach Neutralisation mit organischen Säuren mit Wasser verdünnbar machen. Ein derartiges Aminogruppen und Hydroxylgruppen enthaltendes Mischpolymeres wird durch Polymerisation in Lösung oder durch Emulsionspolymerisation erhalten. Die Lösungspolymerisation wird bevorzugt.

Das Poly(meth)acrylatharz der Komponente A) wird aus (Meth)Acrylatmonomeren gegebenenfalls zusammen mit weiteren radikalisch polymerisierbaren Monomeren hergestellt. Die radikalisch polymerisierbaren Monomeren, d.h. die (Meth)Acrylatmonomeren und/oder weiteren radikalisch polymerisierbaren Monomeren sind radikalisch polymerisierbare aminogruppenhaltige Monomere oder radikalisch polymerisierbare Monomeren, die sowohl Aminogruppen als auch Hydroxylgruppen enthalten.

Sie können im Gemisch mit anderen radikalisch polymerisierbaren Monomeren eingesetzt werden.

Dabei wird bevorzugt so gearbeitet, daß 6 bis 40 Gewichtsteile radikalisch polymerisierbarer aminogruppenhaltiger Monomerer mit 4 bis 50 Gewichtsteile radikalisch polymerisierbarer hydroxylgruppenhaltiger Monomerer oder 8 bis 60 Gewichtsteile radikalisch polymerisierbarer hydroxy- und aminogruppenhaltiger Monomerer pro 10 bis 90 Gewichtsteile der radikalisch polymerisierbaren Monomeren, die keine weiteren reaktiven Gruppen enthalten, eingesetzt werden. Von den eingesetzten radikalisch polymerisierbaren Monomeren sind bevorzugt mehr als 50 Gew.-% und besonders bevorzugt mehr als 80 Gew.% (Meth)Acrylatmonomere. Diese (Meth)Acrylatmonomere können beispielsweise über ihre Esterfunktion Aminogruppen und/oder Hydroxylgruppen enthalten oder können als weitere nicht-funktionelle Monomere auftreten.

In der vorliegenden Beschreibung wird unter (Meth)Acrylat Acrylat und/oder Methacrylat verstanden.

Gemäß einer bevorzugten Ausführungsform können von den 10 bis 90 Gewichtsteilen der radikalisch polymerisierbaren Monomeren, die keine weiteren reaktiven Gruppen enthalten, 0,1 bis 7 Gewichtsteile ersetzt sein durch ethylenisch polyungesättigte Monomere.

Als aminogruppenhaltige Monomere können beispielsweise Monomere der allgemeinen Formel

R-CH=CR'-X-A-N(R'')₂

eingesetzt werden, wobei
- R =: -R' oder -X-CₙH₂ₙ₊₁
- R' =: -H oder -CₙH₂ₙ₊₁
- R''=: -R', -CₙH₂ₙOH und/oder -CₙH₂ₙNR₂
wobei R wie vorstehend definiert ist, und
- X =: -COO-, -CONH-, -CH₂O- oder -O-,
- A =: -CₙH₂ₙ- oder 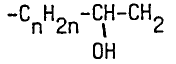 und
- n =: 1 bis 8, bevorzugt 1 bis 3 bedeuten.

Beispiele für ungesättigte N-gruppenhaltige Monomere sind N-Dialkyl- oder N-Monoalkyl-aminoalkyl(meth)acrylate oder die entsprechenden N-Alkanol-Verbindungen wie beispielsweise N-Diethyl-aminoethylmethacrylat oder N-tert-Butylaminoethylacrylat, N-Dialkyl- oder N-Monoalkylaminoalkyl(meth)acrylamid oder die entsprechende N-Alkanol-Verbindungen wie beispielsweise N-Dimethyl-amino-ethanolacrylamid und/oder Vinylgruppen enthaltende heterocyclische Verbindungen mit einem oder mehreren basischen Stickstoffatomen wie beispielsweise N-Vinylimidazol.

Unter radikalisch polymerisierbaren hydroxylgruppenhaltigen Monomeren werden beispielsweise solche verstanden, die außer einer polymerisierbaren ethylenisch ungesättigten Gruppe noch mindestens eine Hydroxylgruppe an einem C₂ bis C₂₀ linearen, verzweigten oder cyclischen Kohlenstoffgerüst enthalten. Es sind hauptsächlich ungesättigte Veresterungsprodukte der allgemeinen Formel

R - CH = CR' - X - B

worin
R, R' und X wie vorstehend definiert sind, und
B eine lineare oder verzweigte C₁₋₆-Alkylgruppe mit 1-3 OH-Gruppen ist.

Besonders geeignet sind (Meth)acrylsäure-hydroxyalkylester wie beispielsweise 2-Hydroxyethylacrylat, 2-Hydroxy-propylmethacrylat, Butandiol-1,4-monoacrylat, 2,3-Dihydroxy-propylmethacrylat, Pentaerythritmonomethacrylat, Polypropylenglykolmonoacrylat oder auch Fumarsäuredihydroxyalkylester. Es können jedoch auch N-Hydroxyalkyl(meth)acrylamid oder N-Hydroxyalkylfumarsäure-mono- oder diamide wie beispielsweise N-Hydroxymethyl-acrylamid oder N-(2-Hydroxypropyl)methacrylamid eingesetzt werden. Besonders elastische Eigenschaften sind beim Einsatz eines Reaktionsproduktes von Hydroxyalkyl(meth)acrylat mit ε-Caprolacton zu erhalten. Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester wie 2,3-Dihydroxypropyl-monoallylether, Trimethylpropan-monoallylether oder 2,3-Dihydroxypropabsäureallylester. Besonders geeignet sind Hydroxyethyl-, Hydroxypropyl- und/oder Butandiol-1,4-mono(meth)acrylat.

Die Auswahl der zusätzlich möglichen radikalisch polymerisierbaren Monomeren, die keine weiteren reaktiven Gruppen enthalten, erfolgt nach den mechanischen Eigenschaften des Films und der Verträglichkeit der dabei eingesetzten Harzkombination. Es werden Acrylsäure-alkylester, Methacrylsäure-alkylester, Maleinsäure- und/oder Fumarsäuredialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromatentyp wie Styrol` α-substituierte Styrole wie α-Methylstyrol, o-, m- und p-Alkylstyrole wie Vinyltoluol oder p-tert-Butylstyrol, halogenierte Vinylbenzole wie o-oder p-Chlorstyrol, Methacrylsäureester mit kurzer Kette wie Methylmethacrylat, Ethylmethylacrylat, Propylmethacrylat, Butylmethacrylat, Cyclohexylmethacrylat, Isobornyl-methacrylat, Dihydroxicyclopentadienylmethacrylat, (Meth)acrylamid und/oder auch (Meth)acrylnitril, "Weiche" Monomere sind dagegen Acrylsäureester mit einer langen Alkoholkette wie n-Butylacrylat, Isobutylacrylat, tert-Butylacrylat, 2-Ethylhexylacrylat und/oder Lauryl-acrylat. Es können auch ungesättigte Ether wie Ethoxyethylmethacrylat oder Tetrahydrofurfurylacrylat eingesetzt werden. Monomere vom Vinylestertyp, vorzugsweise Vinylester-α-verzweigter Monocarbonsäuren, besonders der Versaticsäure-vinylester, können auch einpolymerisiert werden, wenn geeignete Reaktionsbedingungen und Reaktionscomonomere ausgewählt werden. Unter ethylenisch polyungesättigten Monomeren werden Verbindungen mit mindestens 2 radikalisch polymerisierbaren Doppelbindungen nach der allgemeinen Formel

R-CH=CR'-D-(-CR'=CH-R)ₘ,

und m = 1 bis 3, bevorzugt m = 1, verstanden, wobei außer den weiter oben angegebenen Bedeutungen für R und R', D das allgemeine tragende chemische Grundgerüst für die reaktive Doppelbindung ist. Beispiele für D sind der m- oder p-Phenylenrest und Reste der Formel

-X-Alkylen-X'-,

worin Alkylen bevorzugt 2 bis 18 C-Atome aufweist, X und X' gleiche oder verschiedene verbindende Gruppen, z.B. -O-, -CONH-, -COO-, -NHCOO- oder -NH-CO-NH- sind. D kann z.B. ein Benzolring wie im Divinylbenzol sein, der gegebenenfalls auch substituiert sein kann wie p-Methyldivinylbenzol oder o-Nonyl-divinylbenzol. Weitere Beispiele für geeignete polyungesättigte Monomere sind Reaktionsprodukte aus Polyalkoholen, besonders Dialkoholen, mit α,β-ungesättigten Carbonsäuren, wie sie schon definiert sind. Beispiele hierfür sind Ethandiol-diacrylat, Ethylenglykol-dimethylacrylat, 1,4-Butandiol-diacrylat, 1,6-Hexandiol-diacrylat. Neopentylglykol-dimethylacrylat, Triethylenglykol-dimethacrylat, Polyglykol-400-diacrylat, Glycerin-dimethacrylat, Trimethylolpropan-triacrylat und/oder Pentaerythrit-diacrylat. Urethan- und amidgruppenhaltige polyfunktionelle Monomere werden hergestellt durch Reaktion von beispielsweise Hexandiisocyanat, Methacrylsäure-β-isocyanato-ethylester oder Dimethyl-m-isopropenyl-toluylisocyanat mit Hydroxyethyl(meth)acrylat oder (Meth)acrylsäure. Beispiele für anders aufgebaute geeignete Verbindungen sind Allylmethacrylat, Diallylphthalat, Butandiolvinylether, Divinylethylenharnstoff, Divinylpropylenharnstoff, Maleinsäurediallylester, Bis-maleinimide, Glyoxybisacrylamid und/oder das Reaktionsprodukt von Epoxidharz mit (Meth)acrylsäure oder Fumarsäurehalbestern. Bevorzugt wird der Einsatz von difuktionellen ungesättigten Monomeren wie Butandiol-diacrylat oder Hexandiol-diacrylat. Bei Verwendung von Glycidyl-methacrylat und Methacrylsäure entsteht das entsprechende Glycerindimethacrylat automatisch bei der Polymerisation. In gleicher Weise kann die Reaktion von eingebautem verethertem Alkoxy(meth)acrylamid mit Amid, Carboxyl- oder Hydroxylgruppe ausgenutzt werden. Die Art und Menge an polyungesättigten Monomeren ist mit den Reaktionsbedingungen (Katalysatoren, Reaktionstemperatur, Lösemittel) sorgfältig abzustimmen, um die gewünschte hohe Viskosität ohne Gelierung zu erhalten.

Die Copolymerisation erfolgt in bekannter Weise bevorzugt durch Lösungspolymerisation unter Zusatz von radikalischen Initiatoren, sowie gegebenenfalls Reglern bei Temperaturen von z.B. 50 bis 160°C. Sie erfolgt in einer Flüssigkeit, in der sich Monomere und Polymere gemeinsam lösen. Der Gehalt an Monomeren bzw. Polymeren nach der Auspolymerisation beträgt dabei etwa 50 bis 90 Gew.-%. Es wird eine Lösungspolymerisation in organischen Lösemitteln bevorzugt, die mit Wasser verdünnbar sind und später im einzelnen beschrieben werden. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs der Monomeren getrennt zudosiert. Als Katalysatoren, die in organischen Lösemitteln löslich sind, werden 0,1 bis 5 Gew.-%, bevorzugt 0,5 bis 3 Gew.-% bezogen auf die eingesetzte Monomeren-Menge an Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctat oder tert.-Butylperbenzoat. Thermisch zerfallende Azo-Verbindungen sind beispielsweise 2,2'-Azo-bis-(2-cyanopropan) oder 1,1'-Azo-bis-cyclohexancarbonitril. Als Initiatoren können auch radikalbildende Verbindungen vom Dibenuzyltyp wie 1,2-Bis-(4-methylphenyl)1,2-dicarbethoxy-1,2-dicyanoethan verwendet werden. Durch den Einsatz von Reglern kann die Molmasse in bekannter Weise herabgesetzt werden. Bevorzugt werden hierzu Mercaptane, halogenhaltige Verbindungen und andere radikalübertragende Substanzen eingesetzt. Besonders bevorzugt sind n- oder tert.-Dodecylmercaptan, Tetrakismercaptoacetylpenta-erythrit, tert.-Butyl-o-thiokresol, Buten-1-ol oder dimeres α-Methylstyrol.

Die Herstellung von Amino-poly(meth)acrylatharzen der Komponente A) kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A 34 36 346 beschrieben. Hier werden zunächst epoxidgruppenhaltige monoethylenisch ungesättigte Monomere in das Copolymere einpolymerisiert. Danach wird mit überschüssigem Ammoniak, primären und/oder sekundären Monoaminen und/oder Monoaminoalkoholen umgesetzt und anschließend der Aminüberschuß abdestilliert. Eine ähnliche Umsetzung kann beispielsweise bevorzugt in äquivalenten Mengen mit Ketiminen von Polyaminen erfolgen, die eine sekundäre Aminogruppe und eine oder mehrere primäre Aminogruppen enthalten wie beispielsweise das Monoketimin aus Methylisobutylketon und Methylaminopropylamin oder das Diketimin aus Methylisobutylketon und Diethylentriamin. Epoxidgruppen enthaltende radikalisch polymerisierbare monoethylenisch ungesättigte Monomere sind Mono- und/oder Diglycidiylverbindungen von α,β-ungesättigten Säuren, Säureaminden, Alkoholen oder Aminen wie beispielsweise Glycidester der (Meth)acrylsäure, der Fumarsäure und/oder Maleinsäure, der Fumarsäure und/oder Maleinsäuremonoalkylester, sowie Glycidylverbindung von (Meth)-acrylsäureamid, Fumarsäurediamid, Maleinsäurediamid oder Maleinimid und/oder Glycidether von ungesättigten Alkoholen wie Vinyl- und/oder Allylalkohol. Andere geeignete Verbindungen sind Monoglycidylester von Dicarbonsäuremonoestern mit ungesättigten Alkoholen wie Phthalsäure-allyl-glycidylester. Es können jedoch auch Vinyl- und Allylester von epoxydierten Fettsäuren eingesetzt werden wie 2,3-Epoxybuttersäureallylester oder Epoxystearinsäureallylester. Außerdem eignen sich auch Diolefine, deren eine Doppelbindung epoxidiert worden ist, wie Vinyl-ethylenoxid, 1-Methyl-1-vinyl-ethylenoxid oder 3,4-Epoxy-1-vinyl-cyclohexan. Glycidylacrylat und Glycidylmethacrylat werden für die Copolymerisation bevorzugt. Der Anteil von Epoxidgruppen enthaltenden ungesättigten Monomeren im Copolymerisat beträgt im allgemeinen 8 bis 50 Gew.-%. Die untere Grenze liegt bevorzugt bei 12 Gew.-%, die obere Grenze bei 35 Gew.-%. Die Polymerisation muß vollständig abgelaufen sein, bevor die Umsetzung mit Aminen stattfindet, weil sonst reversible Nebenreaktionen an den aktivierten Doppelbindungen der Monomeren mit den sekundären Aminen auftreten.

Als sekundäre Amine für die Umsetzung mit den Epoxidgruppen sind besonders zweckmäßig sekundäre Amine der Formel

R-NH-R'

wobei
- R =: -H oder -R'
- R' =: CₙH₂ₙ₊₁, -CₙH₂ₙOH und/oder -CₙH₂ₙ-N = C(Alkyl)₂
und n = 1 bis 8, bevorzug 1 bis 2 betragen, und Alkyl 1 bis 8 C-Atome hat.

Folgende Amine können beispielsweise für die Reaktion eingesetzt werden: C₁ bis C₆-Dialkylamine mit gleichen oder verschiedenen Alkylgruppen im Molekül wie Dimethyl, Diethyl, Diisopropyl, Dibutyl-, Methylethyl-, Methylpropyl-, Methylbutylamin, monocycloaliphatische Amine wie Morpholin, Piperidin, Pyrrolidin und/oder Monoalkanolamine wie N-Methylaminoethanol und/oder Dialkanolamine wie Diethanolamin, Diisopropanolamin. Beispiele für primäre Amine oder Aminoalkohole sind C₁ bis C₈-Alkylamine wie Ethylamin, 2-Ethylhexylamin oder Aminoethanol. In jedem Fall sind C₁ bis C₄-Alkylgruppen, insbesondere C₁- und/oder C₂-Alkylgruppen bevorzugt. Besonders bevorzugt sind sekundäre Amine wie Dimethylamin, Diethylamin, Methylethylamin oder N-Methyl-aminoethanol, weil damit nach Neutralisation gut lösliche Lacke mit hohem pH-Wert erhalten werden können. Die oben erwähnten primären Amine werden meistens im Gemisch mit sekundären Aminen eingesetzt, weil sonst zu hochviskose Produkte entstehen.

Die Zahl der primären und/oder sekundären Hydroxylgruppen wird so optimiert, daß beim Einbrennen des Lacks ein gut vernetzter, lösemittelbeständiger Film entsteht. Berücksichtigt man, daß beim Umsetzen mit Amin aus jeder Epoxidgruppe eine sekundäre OH-Gruppe entsteht, so ist es angebracht, mindestens eine weitere Hydroxylgruppe pro Molekül, bevorzugt primäre Hydroxylgruppe über andere ungesättigte Monomere einzupolymerisieren. Die Zahl der Epoxidgruppen bestimmt die Zahl der damit zur Umsetzung kommenden Aminogruppen und damit auch die Löslichkeit des Produktes. Es soll mindestens eine Epoxidgruppe pro Molekül vorhanden sein. Oft ist es vorteilhaft, eine erhöhte Hydroxylzahl mit einer niedrigen Aminzahl und umgekehrt zu kombinieren.

In einem anderen bevorzugten Verfahren gelingt der Einbau von Aminogruppen durch Umsetzung eines hydroxylgruppenhaltigen Poly(meth)acrylatharzes mit isocyanatgruppenhaltigen Aminoverbindungen. Diese werden beispielsweise hergestellt durch Reaktion von 1 Mol Diisocyanat mit 1 Mol Dialkylaminoalkanol.

Um den in den Lack eingeschleppten hohen Lösemittelanteil zu reduzieren, kann das alkoholische Lösemittel des Lösungspolymerisats gegebenenfalls unter Vakuum bei erhöhten Temperaturen abdestilliert und anschließend eine Emulsion mit Säure und Wasser hergestellt werden. Ein anderes bevorzugtes Verfahren ist die Lösungspolymerisation in nicht-wasserlöslichen Lösemitteln. Dieser Harztyp wird nach Neutralisieren mit Säure in Wasser emulgiert und daran anschließend das Lösemittel mit Wasser azeotrop ausgekreist. Sollen ohne Viskositätsschwierigkeiten höhere Molmassen erhalten werden, dann ist es notwendig, eine Emulsionspolymerisation durchzuführen.

In der Komponente B) werden z.B. Di- und/oder Polyisocyanate verwendet, wobei die reaktiven Isocyanatgruppen durch Schutzgruppen blockiert sind.

Als typische Diisocyanate zur Umsetzung mit dem Polyol-/Diol-Gemisch werden beispielsweise solche auf der Basis von linearen oder verzweigten aliphatischen, cycloaliphatischen und/oder aromatischen Kohlenwasserstoffen mit einem NCO-Gehalt von 20 bis 50 % verwendet. Sie enthalten als funktionelle Gruppen zwei Isocyanatgruppen, die im Molekül asymmetrisch oder symmetrisch angeordnet sind. Sie können aliphatisch, alicyclisch, arylaliphatisch oder aromatisch sein.

Für Decklacksysteme werden beispielsweise aufgrund ihrer guten Beständigkeit gegenüber ultraviolettem Licht bevorzugt Diisocyanate eingesetzt, bei denen die Isocyanatgruppe nicht an ein aromatisches C-Atom gebunden ist. Beispiele für verwendbare aliphatische Diisocyanate sind solche der allgemeinen Formel 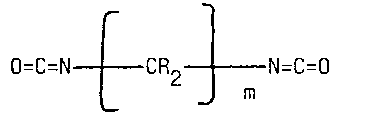
worin m eine ganze Zahl von 2 bis 20, insbesondere 5 bis 8 ist und R, das gleich oder verschieden sein kann, Wasserstoff oder einen niedrigen Alkylrest mit 1 bis 8 C-Atomen, vorzugsweise eine Methylgruppe darstellt. Besonders bevorzugt werden die unter diese Formel fallenden Diisocyanate, deren NCO-Gruppen über eine CH₂-Gruppe an einen linearen, verzweigten oder cycloaliphatischen, speziell unverzweigten linearen aliphatischen Rest gebunden sind. Beispiele hierfür sind Propylendiisocyanat, Ethylethylendiisocyanat, Dimethylethylendiisocyanat, Methyltrimethylendiisocyanat, Trimethylhexandiisocyanat, 1,12-Dodecandiisocyanat, 1,6-Bis-(isocyanat)pentan, 1,6-Bis-(isocyanat)hexan, 1,6-Bis-(isocyanat)-2,2,4-trimethylhexan, 1,4-Bis-(2-isocyanatethyl)cyclohexan oder 1,3-Bis-(2-isocyanatmethyl)cyclohexan. Beispiele für geeignete cycloaliphatische Diisocyanate sind Cyclopentylendiisocyanat, 1,4-Bis-(isocyanat)cyclohexan, Bis-(4-isocyanatcyclohexyl)methan, 5-Isocyanat-3-(isocyanatmethyl)-1,1,3-trimethylcyclohexan oder Methandiisocyanat. Als arylaliphatische Diisocyanate können verwendet werden beispielsweise 1,3-Bis-(1-isocyanatmethyl)benzol, 1,4-Bis-(1-isocyanat-1-methylethyl)benzol oder m-Tetramethyl-xylylendiisocyanat. Besonders bevorzugt sind Polyesterurethanharze auf Basis von 5-Isocyanat-3-(isocyanatmethyl)-1,1,3-trimethylcyclohexan (= Desmodur W®) als Gemisch verschiedene sterischer Konfiguration. Die Synthese erfolgt durch gemeinsame Reaktion der Reaktanten im Gemisch oder stufenweise zu einem sequentierten Aufbau.

Für die Umsetzung mit der Komponente A) werden jedoch bevorzug drei- und höherwertige, z.B. drei- bis fünfwertige, besonders bevorzugt dreiwertige aliphatische und/oder aromatische blockierte Polyisocyanate mit einer zahlenmittleren Molmasse Mₙ von 500 bis 1500 verwendet, die gegebenenfalls auch Aminogruppen enthalten können.

Als Polyisocyanate haben sich besonders gut die sogenannten "Lackpolyisocyanate" geeignet, die aus den vorstehend schon beschriebenen aliphatischen Diisocyanaten hergestellt werden.

Diese Polyisocyanate entstehen aus den Diisocyanaten durch Trimerisierung, Umsetzung mit Wasser oder anteilweise Reaktion mit tri- und höherfunktionellen Polyolen. Beispiele hierfür sind das Biuret aus Hexamethylendiisocyanat und Wasser, das Isocyanurat des Hexamethylendiisocyanats oder Isophorondiisocyanats oder das Addukt von 3 Molen Isophorondiisocyanat oder m-Tetramethyl-xylylendiisocyanat an 1 Mol Trimethylolpropan. Durch Reaktion mit Dialkylaminoalkanolen oder Dialkylaminoalkylaminen werden unter schonenden Reaktionsbeindungen basische "Diisocyanate" hergestellt, wobei die Alkylgruppen linear oder verzweigt, aliphatisch oder cyloaliphatisch mit C-Ketten von 1 bis 10 Kohlenstoffatomen aufgebaut sind. Beispiele hierfür sind Dimethylaminopropylamin, Diethylaminoethylamin, Diethylaminoethanol oder Dimethylaminoisopropanol. Brauchbare Aminoalkohole können auch durch Michael-Addition von Hydroxyalkyl(meth)acrylaten oder Hydroxyalkyl(meth)acrylamiden mit sekundären Aminen hergestellt werden.

Eine andere Gruppe von polyfunktionellen Isocyanaten sind Oxadiazintrion-alkyldiisocyanate, die an Trimethylolpropan addiert werden können. Höherfunktionelle Polyisocyanate lassen sich auch durch Reaktion von 2 Mol Triisocyanaten mit H-aktiven di-funktionellen Verbindungen, wie Dialkoholen, Diaminen oder Aminoalkoholen wie Ethanolaminen oder N-Methyldiethanolaminen, herstellen.

Die freien Isocyanatgruppen werden gemeinsam oder einzeln verkappt (blockiert), damit sie bei Raumtemperatur gegen Wasser oder den aktiven Wasserstoffatomen des Basisharzes /Hydroxyl- oder Amin-Wasserstoff-Gruppen) geschützt sind. Als Blockierungsmittel geeignet sind monofunktionelle, aciden Wasserstoff enthaltende Verbindungen mit nur einer einzigen Amin-, Amid, Imid-, Lactam-, Thio- oder Hydroxylgruppe. Im allgemeinen werden flüchtige, aktiven Wasserstoff enthaltende Verbindungen mit niedrigen Molmassen, vorzugsweise von nicht mehr als 300, bevorzugt von nicht mehr als 200, verwendet. Sie werden zweckmäßig bei Temperaturen über 50°C, vorzugsweise zwischen 80 und 120°C mit den Isocyanatgruppen umgesetzt. Das Blockierungsmittel wird in solchen Mengen eingesetzt, daß auf ein NCO-Äquivalent ein Äquivalent Blockierungsmittel kommt, wobei gegebenenfalls übliche tertiäre Amine oder geringe Mengen an Zinnsalzen wie Zinn(II)-octoat oder Dibutylzinndilaurat, mitverwendet werden können. Geeignete Blockierungsmittel sind beispielsweise sekundäre oder tertiäre, aliphatische oder cycloaliphatische Alkohole, wie Isopropanol, tert.-Butanol, 2-Ethylhexanol, Furfurol, Cyclohexanol oder Hydroxyalkylester, Dialkylaminoalkohole wie Dimethylaminoethanol, Oxime wie Formaldehydoxim, Acetaldehydoxim, Methylethylketonoxim, Cyclohexanonoxim, Trimethylcyclohexanonoxim, 2,2,6,6-Tetra-methyl-piperidon-(4)-oxim, Acetophenonoxim, Benzophenonoxim oder Dietylglyoxim, Lactame, wie ε-Caprolactam, α-Valerolactam, 1-Butyrolactam, Pyrrolidon-2, Hydroxamsäuren bzw. deren Ester, wie Acethydroxamsäure, Benzydroxamsäure, Phenole, wie Phenol, Kresol, tert.-Butylphenol, Dimethylaminophenol, N-Alkylamide, wie Methyl-acetamid, Imidazole, wie 2-Methylimidazol, Imide wie Phthalimid oder N-Hydroxymaleinimid, sowie enolisierende Verbindungen wie Malonsäureester, Acetessigsäureester oder NH-funktionelle Enamine. Es werden aber auch β-Hydroxyglykole oder -glykolether und Glykolamide empfohlen. Oxime und Lactame sind Verkappungsmittel von besonderem Interesse, weil die damit verkappten Polyisocyanate bei relativ niedrigen Temperaturen reagieren. Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Besonders bevorzugte Blockierungsmittel sind beim erfindungsgemäßen Verfahren Verbindungen der Formel

X―H (19)

in welcher X für 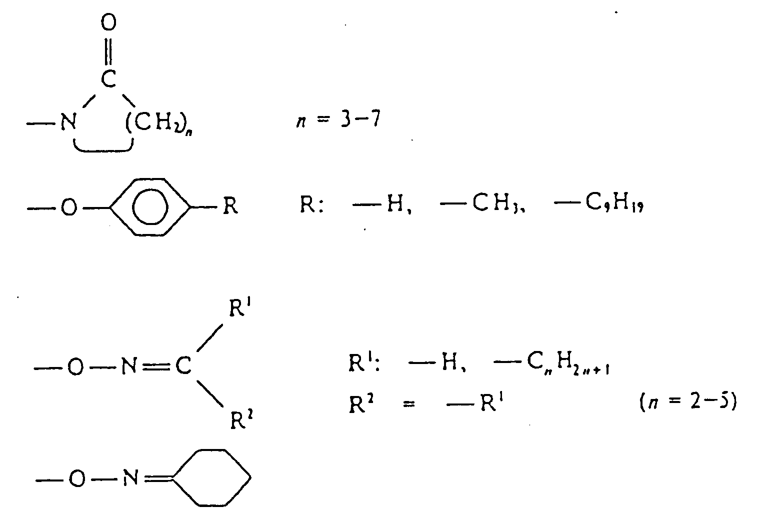
steht.

Bevorzugt Beispiele sind ε-Caprolactam, Methyl-ethyl-ketoxim und Butoxyethanol.

Zur Durchführung der Blockierungsreaktion wird im allgemeinen die Isocyanatkomponente vorgelegt und der Reaktionspartner zugegeben. Die Reaktion kann in Substanz oder auch in Gegenwart geeigneter (inerter) Lösemittel durchgeführt werden.

Bei der Herstellung des Lacks können Härtungskatalysatoren zugesetzt werden, um eine Reaktion zwischen Basislack (Komponente A) und Vernetzungsmittel (Komponente B) zu beschleunigen. Beim Einsatz von blockierten Polyisocyanaten können metallorganische Katalysatoren, wie etwa Dibutylzinndilaurat, gegebenenfalls in Kombination mit basischen Katalysatoren, wie 1,4-Diazabicyclo[2.2.2]octan, verwendet werden.

Zur Formulierung des Klarlacks können 20 bis 60 Gew.-% blockierte Polyisocyanate (Komponente B), die gegebenenfalls auch Aminogruppen enthalten, zugemischt werden. Bevorzugte Mengen sind 40 bis 70 Gew.-% bezüglich A bzw. 30 bis 60 Gew.-% bezüglich B, bezogen auf den Gesamtfestkörper beider Bindemittel. Die Komponenten A) und B) können gegebenenfalls miteinander kalt vermischt oder auch bei erhöhter Temperatur prekondensiert werden. Dabei können die Komponenten A) und B) in gewissem Umfang miteinander reagieren, ohne daß das Gemisch die Eigenschaft verliert, durch Neutralisation wasserverdünnbar zu werden.

Zur Steuerung des Löslichkeitsverhaltens und der Lagerstabilität können dem Lack geringe Mengen organischer Lösemittel zugesetzt werden. Sie sind im allgemeinen wasserverdünnbar. Ihr Verdunstungsverhalten dient zur Beeinflussung der Oberflächenqualität. Solche Lösemittel sind beispielsweise Ethylenglykol, Ethoxyethanol, Butoxyethanol, Diethylenglykol, Triethylenglykol, Diethylenglykol-dimethylether, Propylenglykol, Methoxypropanol, Ethoxypropanol, Dipropylenglykolmonomethylether, Dipropylenglykol-dimethylether, Diacetonalkohol, Ethanol, Isopropanol, n-Butanol, sek.-Butanol, tert.-Butanol, Acton, Methoxypropan, Dioxan, Tetrahydrofuran, N-Methylpyrrolidon oder ihre Gemische. Zur Verlaufsverbesserung kann auch anteilsweise ein nicht-wasserlösliches, hochsiedendes Lösemittel zugesetzt werden, wie gesättigte Kohlenwasserstoffe, wie z.B. Benzinfraktionen, Hexylenglykol, Phenoxyethanol, Isodekanol oder 2,2,4-Trimethylpentandiol-1,3-monisobutyrat. Der Anteil an üblichen organischen Lösemitteln liegt möglichst niedrig. Er liegt beispielsweise unter 20, bevorzugt unter 15 Gew.-% in dem fertigen Lack.

Die erfindungsgemäß eingesetzten Lacke können so formuliert werden, daß sie auch übliche Lackhilfsmittel enthalten, wie z.B. Verlaufsmittel, Entlüftungs-, Lichtschutz-, Antiabsetzmittel. Zur besseren Abstimmung der anwendungstechnischen Eigenschaften (etwa Spritzverhalten/Anlöseresistenz) können dem Überzugmittel anteilig lackübliche Aminharze etwa vom Melamin-oder Benzoguanamintyp zugesetzt werden.

In die erfindungsgemäß verwendeten kationischen Lacke können transparente oder deckende Pigmente in üblicher Weise eingearbeitet werden, d. h. die Bindemittel können entweder direkt pigmentiert oder durch Mischung von Pigmentpasten mit meist dispersionsartigen Komplettierungs-Bindemitteln hergestellt werden. Zur Farbgebung dienen transparente und deckende Pigmente wie sie in der deutschen Norm DIN 55 944 beschrieben sind. Als Pigmente eignen sich anorganische Pigmente, wie beispielsweise Titandioxid, Ruß, Eisenoxide und/oder organische Pigmente, wie beispielsweise Phthalocyanine, Chinacridone und/oder halogenierte Thioindigopigmente, sowie Füllstoffe, wie Bariumsulfat, Talkum oder Schichtsilikate. Als Dispergieraggregate eignen sich Rührscheibengeräte, Dreiwalzenstühle, Kugelmühlen oder bevorzugt Sand- oder Perlmühlen. Die optimale Mahlgut-Zusammensetzung ergibt sich aus der geeigneten Kombination der Hauptbestandteile des Mahlgutes - Pigment, Bindemittel und Lösemittel (Wasser) - und wird für jeden Dispergieraggregat-Typ gesondert bestimmt. Es ist die Aufgabe des Dispergierprozesses Pigmentagglomerate soweit wie möglich wieder in Einzelteile zu zerlegen, um ihre volle Wirksamkeit in optischer Hinsicht entfalten zu können. Dabei muß mindestens soviel Bindemittel im Mahlgut vorhanden sein, wie zur vollständigen Benetzung des Pigmentes notwendig sind. Im allgemeinen ist es günstig so konzentriert wie möglich zu arbeiten, um so wenig Pastenharz wie möglich in eine spätere Lackrezeptur einzuschleppen. Der in Betracht kommende Viskositätsbereich wird so festgelegt, daß in möglichst kurzer Zeit eine vollständige Dispergierung erreicht wird. Die optimale Mahlgutzusammensetzung wird auf das jeweilige Pigment abgestimmt.

Um die Oberfläche der Pigmente einwandfrei zu benetzen, kann es günstig, aber nicht notwendig, sein, dem Mahlgut Dispergierhilfsmittel (Netzmittel) zuzusetzen, die von der Oberfläche der Pigmente adsorbiert werden und durch Herabsetzen der Grenzflächenspannung zwischen Pigment und Bindemittel den Benetzungsvorgang zusätzlich unterstützen. Als Netzmittel sind beispielsweise für diesen Zweck übliche geeignet.

Die erfindungsgemäßen Lacke, Klar- und Decklacke, werden in üblicher Weise aufgetragen, beispielsweise durch Spritzen, Tauchen, Fluten, Walzen oder Rakeln. Bevorzugt werden Schichtdicken für die Klar- und Decklacke in der Größenordnung von 2 bis 70 µm, besonders bevorzugt von 5 bis 50 µm, bezogen auf die Trockenfilmstärke, hergestellt. Die Schichtdicke hängt vom jeweils gewünschten Verwendungszweck ab. Beispielsweise werden bei Lackierungen von Emballagen niedrige Schichtdicken angestrebt, wohingegen bei Reparaturlackierungen im allgemeinen höhere Schichtdicken ausgeführt werden.

Die erfindungsgemäß aufgebrachten Lacke werden im allgemeinen bei 80 bis 210 °C bevorzugt bei 110 bis 165 °C eingebrannt. Klarlacke werden bevorzugt mit Polyisocyanat formuliert; deren Einbrennbereich liegt vorzugsweise bei 135 bis 165 °C. Decklacke werden bevorzugt mit Melaminharzen formuliert, wobei der bevorzugte Einbrennbereich bei 110 bis 145 °C liegt.

Die erfindungsgemäß eingesetzten Lacke können auch Katalysatoren, bevorzugt Säurekatalysatoren zugesetzt werden. Dies ist besonders günstig, wenn die Lacke Melaminhärter enthalten. Die Einbrenntemperaturen liegen dann bei beispielsweise 80 bis 100 °C. Beispiele für verwendbare Säuren sind Acetylsalicylsäure, Maleinsäure Halbester, z. B. Maleinsäure Monobutylester, Phosphorsäure Halbester, Sulfonsäuren, wie beispielsweise alkylsubstituierte Naphthylsulfonsäure, beispielsweise Monylnaphthylsulfonsäure. Die Säurekatalysatoren können aus Lackstabilitätsgründen in üblicher Weise neutralisiert sein.

Die Mehrschichtlackierung kann erfindungsgemäß naß-in-naß erfolgen, wobei der Auftrag der Deck- oder Klarlacke auf die vorhergehende Schicht beispielsweise nach kurzem Vortrocknen oder Ablüftten erfolgen kann.

Das erfindungsgemäße Verfahren unter Verwendung von Deck- oder Klarlacken mit kationischen Bindemitteln kann allgemein für jegliche Art von Lackierungen eingesetzt werden. Beispielweise ist das Verfahren für industrielle Serienlackierungen geeignet, bevorzugt auf dem Kraftfahrzeugsektor oder auch auf dem Gebiet der Lackierung von Geräten, wie Haushaltsgeräte. Die erfindungsgemäße Verfahrensweise kann jedoch auch für Reparaturlackierungen, beispielsweise auf dem Kraftfahrzeugsektor eingesetzt werden.

Die folgenden Beispiele dienen zur Erläuterung der Erfindung.

### Herstellungsbeispiel 1 (Amino-poly(meth)acrylatharz)

725 g Butoxyethanol werden unter Inertgas auf 110 °C unter Einschalten eines Rückflußkühlers erwärmt. Innerhalb von 3 Stunden wird eine Mischung aus 192 g Hydroxyethylacrylat, 137 g Buntandiol-monoacrylat, 228 g Glycidylmethacrylat, 364 g 2-Ethyl-hexylacrylat, 439 g Butylmethacrylat, 438 g Methylmethacrylat, 90 g Styrol und 44 g Azo-bis-isobutyronitril zugegeben. Danach wird 1 Stunde bei 110 °C gehalten, 6 g Azo-bis-isobutyronitril zugegeben und dieser Vorgang nach einer weiteren Stunde wiederholt. Nach 3 Stunden 110 °C wird ein Festkörpergehalt von 72.2 Gew.% und nach Verdünnen auf 60 Gew.% mit Butoxyethanol eine Viskosität von 2.14 Pa.s. bei 25 °C gemessen. Nach Abkühlen auf 50 °C werden ein Gemisch von 120 g Diethylamin und 201 g Isopropanol schnell zugegeben (1.10 Mol Amin auf 1.00 Mol Epoxid). Nach 30 Minuten wird auf 65 °C erwärmt, dann 2 Stunden gehalten, anschließend auf 105 bis 110 °C aufgeheizt und dann 3 Stunden gehalten. Nach Abkühlen auf 80 °C wird unter Vakuum Isopropanol und Aminüberschuß sorgfältig abdestilliert. Einstellen des Festkörpergehaltes mit Butoxyethanol auf etwa 78 Gew.%.
Endwerte:
Festkörpergehalt: 78,7 Gew.% (30 Minuten Erwärmen auf 150 °C)
Aminzahl: 45 mg KOH pro g Festharz
Viskosität: 3.44 Pa.s (60 Gew.% in Butoxyethanol bei 25 °C)

### Herstellungsbeispiel 2

### Herstellung eines wasserverdünnbaren silberfarbenen Metallicbasislacks gemäß DE-OS 36 28 124

### A) Herstellung einer Komponente A

In eine Lösung von 141 g eines Polyesters (OHZ = 88), hergestellt auf der Basis von Phthalsäureanhydrid, Isophthalsäure, Maleinsäureanhydrid, Propanol und Glycerin, wie in der DE-OS 28 11 913 beschrieben, in 70 g Methylethylketon, wurden 100 g eines Anhydridgemisches (SZ/H₂O = 486), hergestellt durch Umsetzung von Trimellithsäureanhydrid mit Propandiol-1,2, bestehend somit aus Trimillithsäureanhydrid und Anhydriden der nachstehenden Formeln I und II 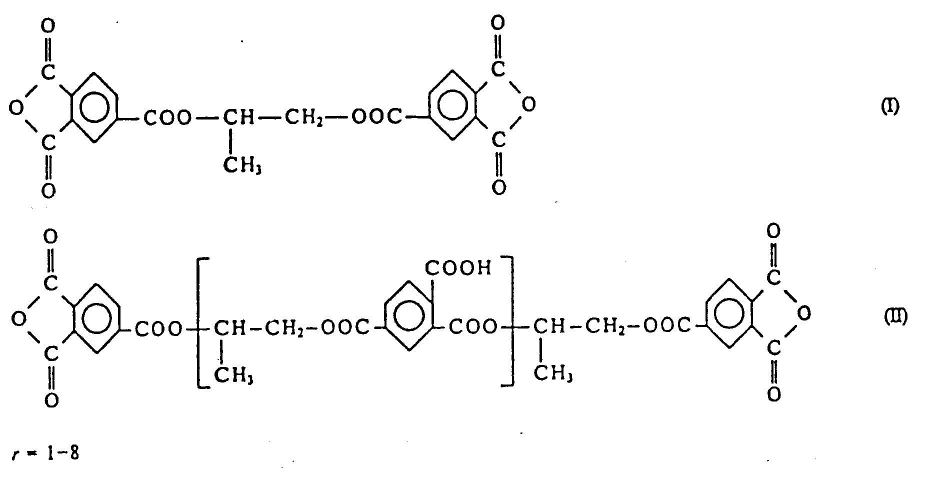
die in 108 g Xylol bei 50 °C homogenisiert worden waren, innerhalb 1 Stunde zugetropft. Bei 90 °C wurde so lange gerührt, bis das Reaktionsgemisch eine Säurezahl in Wasser von 165 (100%iges Harz) erreicht hatte. Danach wurden 12 g Wasser zugemischt und nach 6stündigem Rühren bei 80 bis 90 °C eine Säurezahl in Butanol von 168 (100%iges Harz) erreicht. Die Gemischtemperatur wurde auf 60 °C gesenkt und nach Zugabe von 0,3 Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 g Dimethylamin (60%ig in Wasser) in 860 g Wasser eingerührt. Es wurde eine hellgelbe, opaleszierende Lösung erhalten, aus der bei 0,1 bar und 40 °C das organische Lösungsmittel abdestilliert wurde. Nach Filtration wurde eine gelbliche, praktisch klare wäßrige Harzlösung erhalten.
Festkörpergehalt: ca. 32% (1 Stunde bei 125 °C).
In einen Reaktor, ausgerüstet mit Rührer, Rückflußkühler, Innenthermometer und Dosiervorrichtung für die Monomeren, sowie den Initiator, wurden 705 g der vorstehenden wäßrigen (32%igen) Dispersion und 196 g Wasser gefüllt. Diese Mischung wurde unter Rühren auf 80 °C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80 °C gerührt, um vollständigen Umsatz zu erzielen. Es resultierte eine stabile wäßrige Dispersion mit ca. 40% Feststoffgehalt.

### B) Herstellung einer wäßrigen Polyurethan-Dispersion

In einem Reaktionsgefäß mit Rührer, Innenthermomether, Heizung und Rückflußkühler werden 250 g eines linearen Polyesters (aufgebaut aus Adipinsäure, Isophthalsäure, Hexandiol; OH-Zahl 77, Säurezahl 10) mit 80 g Methylethylketon und 53,3 g Dimethylolpropionsäure zugesetzt. Der Ansatz wird auf 120 °C erwärmt und eine halbe Stunde bei dieser Temperatur gerührt. Anschließend werden bei 70 °C 146,7 g Hexamethylendiisocyanat zugesetzt. Nach einer exothermen Phase (Temperatur < 90 °C) wird der Ansatz so lange bei 75 °C gehalten, bis die Restisocyanatzahlwerte kleiner als 1,8 sind. Die warme Harzmischung wird in 891 g entionisiertes Wasser und 23,5 g Triethylamin unter starkem Rühren dispergiert 5 min nach Ende der Harzzugabe werden 10,5 g Propylendiamin-1,3 in 75 g entionisiertes Wasser zugesetzt und der Ansatz noch 1 Stunde gerührt. Es resultierte eine durchscheinende wäßrige Dispersion mit folgenden Kenndaten:

| | |
|---|---|
| Feststoffgehalt | 30 % |
| Viskosität (20 °C) | 109 mPa · s |
| pH-Wert | 9,8 |
| Säurezahl | 27 (mg KOH pro g Festharz) |

### C) Herstellung einer Bindemittellösung

- 50,00 Gew.-Teile: des vorstehend unter Herstellung der Komponente A beschriebenen wasserverdünnbaren Bindemittels werden mit
- 43,94 Gew.-Teilen: vollentsalztem Wasser und
- 6,00 Gew.-Teilen: Butoxyethanol vermischt und mit
- 0,06 Gew.-Teilen: N-Dimethylaminoethanol auf einen pH-Wert von 6,2-6,4 eingestellt.

### D) Herstellung einer Aluminiumanteigung

- 20,50 Gew.-Teile: einer handelsüblichen Aluminiumpaste mit einem Metallgehalt von 65 % werden mit einer Mischung aus
- 7,00 Gew.-Teilen: Butoxyethanol und
- 14,00 Gew.-Teilen: vollentsalztem Wasser gut verrührt und anschließend mit einer Mischung aus
- 10,00 Gew.-Teilen: Butoxyethanol,
- 34,70 Gew.-Teilen: vollentsalztem Wasser und
- 3,00 Gew.-Teilen: eines handelsüblichen sauren Acrylatverdickers versetzt. Mit einer Mischung aus
- 0,08 Gew.-Teilen: N-Dimethylaminoethanol und
- 0,72 Gew.-Teilen: vollentsalztem Wasser wird auf einen pH-Wert von 6,2-6,4 eingestellt.

### E) Herstellung des wassserverdünnbaren Metallicbasislackes

- 60,00 Gew.-Teile: der unter C beschriebenen Bindemittellösung werden mit
- 19,00 Gew.-Teilen: der in unter D beschriebenen Aluminiumanteigung,
- 1,90 Gew.-Teilen: saurem Acrylat-Verdicker (handelsüblich)
- 9,84 Gew.-Teilen: vollentsalztem Wasser und
- 0,26 Gew.-Teilen: N-Dimethylaminoethanol für eine Dauer von 30 Minuten gerührt.
in dieser Mischung werden
- 5,00 Gew.-Teile: der unter Herstellung B beschriebenen Polyurethandispersion eingerührt.
- 4,00 Gew.-Teile: n-Butanol zugegeben und mit Wasser auf eine Viskosität von 90-95 mPa · s bei 100 sec⁻¹ eingestellt.

Der Festkörpergehalt beträgt 16,8 Gew.-% (120 Minuten im Umlufttrockenofen bei 120 °C).
Die Viskosität liegt bei 90-95 mPa · s bei 100 sec⁻¹.

### Beispiel 1

### Herstellung eines wäßrigen Klarlacks

139 g des im Herstellungsbeispiel 1 hergestellten Amino-Poly(meth)acrylatharzes, 114 g eines handelsüblichen verkappten Isocyanats (B 1370 der Firma Hüls, bei 70 °C unter Vakuum abdestilliert und mit Butylglykol auf einen Festkörpergehalt von 70 Gew.% eingestellt) und 4,3 g Milchsäure wurden mit einem Laborrührer gut vorgemischt und unter Rühren mit 4,9 g eines UV-Absorbers vom Benzotriazol-Typ, sowie mit 2,5 g eines Radikalfängers vom HALS-Typ (HALS = hindered amin light stabilisator) versetzt. Hiernach wurde unter stetigem Rühren mit 234 g vollentsalztem Wasser verdünnt.

Der erhaltene Lack hatte eine Viskosität von 29 Sekunden (gemessen im DIN-4-Becher bei 23 °C).

Der gemäß Herstellungsbeispiel 2 gefertigte und in etwa 15 µm Schichtdicke aufgetragene Wasserbasislack wurde auf einem zuvor grundierten und gefüllerten Prüfblech 6 Minuten bei 80 °C vorgetrocknet. Anschließend wurde mit etwa 40 µm des vorstehenden wäßrigen Klarlacks überlackiert. Es wurde 10 Minuten bei Raumtemperatur abgelüftet, 10 Minuten bei 80 °C vorgeliert und danach wurden beide Schichten gemeinsam 20 Minuten bei 150 °C eingebrannt.

Im Konstantklima nach DIN 50 017 zeigt der Aufbau eine gute Haftung und kein Anquellen.

### Beispiel 2

### Herstellung eines Decklacks

Zu 945 g Amino-poly(meth)acrylatharz nach Herstellungsbeispiel 1 werden 555 g Titandioxid gegeben und 5 Minuten mit dem Dissolver dispergiert. Anschließend wird die Paste 40 Minuten bei Temperatur bis zu 60 °C in einer Perlmühle vermahlen.
Festkörper: 86,6 Gew.-% (nach 30 Minuten Erwärmen auf 150 °C)
Pigment-Bindemittelverhältnis = 0,75 : 1.

772 g der Paste werden zusammen mit 111 g eines höhermolekularen Methoxy-Iminogruppen enthaltenden Melaminharzes (80%ig gelöst in Isobutanol), und 17,7 g einer amingeblockten Sulfonsäure (25%ig) als Katalysator unter dem Dissolver gut verrührt. Anschließend wird im Dissolver unter gutem Rühren weiter verdünnt, und zwar erst mit 7,6 g Ameisensäure (85%ig) und dann langsam mit 142 g vollentsalztem Wasser auf eine Spritzviskosität von 30 Sekunden im Auslaufbecher (DIN 53 211) eingestellt und mit dem Spritzautomaten auf grundierte Bleche gespritzt.

Der Decklack wird 6 Minuten bei 80 °C vorgetrocknet und anschließend 20 Minuten bei 140 °C eingebrannt.

Es wurde ein Film von 36 µm Schichtdicke erhalten, der unter Konstantklima (DIN 50 017) kein Anquellen zeigt und gut haftet.

## Patentansprüche

1. Verfahren zur Mehrschichtlackierung eines Substrats,
**dadurch gekennzeichnet,** daß als äußerste Schicht eine Schicht auf der Basis eines Lackes mit einem oder mehreren kationischen Bindemitteln verwendet wird.

2. Verfahren nach Anspruch 1, dadurch gekennzeichnet, daß als äußerste Schicht eine Decklackschicht aus einem ein oder mehrere kationische Bindemittel, Pigmente und gegebenenfalls Füllstoffe enthaltenden Lack aufgetragen wird.

3. Verfahren nach Anspruch 2, dadurch gekennzeichnet, daß die Decklackschicht auf eine gegebenenfalls mit einem Füller überzogene Grundierungsschicht aufgetragen wird.

4. Verfahren nach Anspruch 1, dadurch gekennzeichnet, daß als äußerste Schicht eine transparente Klarlackschicht aus einem ein oder mehrere kationische Bindemittel, enthaltenden Klarlack aufgetragen wird.

5. Verfahren nach Anspruch 4, dadurch gekennzeichnet, daß durch Auftrag einer Basislackschicht auf ein zu lackierendes Substrat, Ablüften, Trocknen oder Einbrennen der Basislackschicht und Auftrag einer Schicht aus dem transparenten Klarlack, worauf gegebenenfalls nach Ablüften bei erhöhter Temperatur gehärtet wird.

6. Verfahren nach einem der Ansprüche 1 bis 5, dadurch gekennzeichnet, daß ein wäßriger Decklack oder ein wäßriger Klarlack auf der Basis eines kationischen Bindemittels aufgetragen wird.

7. Verfahren nach Anspruch 4, 5 oder 6, dadurch gekennzeichnet, daß ein wäßriger Klarlack aufgetragen wird, der ein oder mehrere transparente Pigmente, UV-Lichtschutzmittel und/oder übliche Klarlackadditive enthält.

8. Verfahren nach einem der vorhergehenden Ansprüche 5, 6 oder 7, dadurch gekennzeichnet, daß zur Herstellung der Basislackschicht ein wäßriger Basislack verwendet wird.

9. Verfahren nach einem der vorhergehenden Ansprüche, dadurch gekennzeichnet, daß ein Decklack oder Klarlack auf der Basis eines vollständig oder teilweise neutralisierten kationischen Poly(meth)acrylat-, Polyester-, Polyurethan- und/oder Polyurethanharnstoff-Harzes und eines Vernetzers auf der Basis eines Amin-Formaldehyd-Kondensationsharzes und/oder blockierten Polyisocyanats verwendet wird.

10. Verfahren nach Anspruch 9, dadurch gekennzeichnet, daß man ein kationisches Poly(meth)acrylat-, Polyester-, Polyurethan- und/oder Polyurethanharnstoff-Harz mit einem Zahlenmittel der Molmasse (Mn) von 1000 bis 100000, einer OH-Zahl von 0 bis 450, einer Aminzahl von 20 bis 200 und einer Glasübergangstemperatur von -50° bis +150°C verwendet.

11. Verfahren nach einem der vorhergehenden Ansprüche, dadurch gekennzeichnet, daß man einen Decklack oder Klarlack verwendet, der
A) 40 bis 80 Gew.% eines mit Säuren vollständig oder teilweise neutralisierten kationischen Poly(meth)acrylatharzes mit einem Zahlenmittel der Molmasse (Mn) von 1000 bis 100000, einer OH-Zahl von 60 bis 200, einer Aminzahl von 30 bis 150 und einer Glasübergangstemperatur von -50° bis +150°C, und
B) 60 bis 20 Gew.% eines blockierten Polyisocyanats, mit mindestens zwei gegenüber den Amino- und/oder OH-Gruppen der Komponente A) reaktiven Gruppen pro Molekül,
wobei sich die Gewichtsprozente der Komponenten A) und B) jeweils auf das Festharz beziehen und auf 100 Gew.% addieren, enthält.

12. Verwendung eines Lacks auf der Basis von kationischen Bindemitteln zur Herstellung der äußersten Lackschicht bei der Mehrschichtlackierung.

13. Verwendung eines Lackes auf der Basis der Bindemittel und Härterkomponenten, wie in einem der Ansprüche 9 bis 11 definiert zur Herstellung der äußersten Lackschicht bei der Herstellung von Mehrschichtlackierungen.

## Claims

1. A process for the multilayer coating of a substrate, **characterised in that** a coat based on a lacquer containing one or more cationic binder vehicles is used as the outermost coat.

2. A process according to claim 1, characterised in that a covering lacquer coat of a lacquer containing one or more cationic binder vehicles, pigments and optionally extenders is applied as the outermost coat.

3. A process according to claim 2, characterised in that the covering lacquer coat is applied to a primer coat which is optionally overcoated with a primer surfacer.

4. A process according to claim 1, characterised in that a transparent clear lacquer coat of a clear lacquer containing one or more cationic binder vehicles is applied as the outermost coat.

5. A process according to claim 4, characterised by the application of a base lacquer coat to a substrate to be coated, ventilating, drying or stoving the base lacquer coat, and the application of a coat of the transparent clear lacquer, whereupon hardening is optionally effected at an elevated temperature after ventilating.

6. A process according to any one of claims 1 to 5, characterised in that an aqueous covering lacquer or an aqueous clear lacquer based on a cationic binder vehicle is applied.

7. A process according to claims 4, 5 or 6, characterised in that an aqueous clear lacquer is applied which contains one or more transparent pigments, UV light stabilisers and/or customary clear lacquer additives.

8. A process according to any one of the preceding claims 5, 6 or 7, characterised in that an aqueous base lacquer is used for the production of the base lacquer coat.

9. A process according to any one of the preceding claims, characterised in that a covering lacquer or clear lacquer is used which is based on a completely or partially neutralised cationic poly(meth)acrylate, polyester, polyurethane and/or polyurethane-urea resin and on a crosslinking agent based on an amine-formaldehyde condensation resin and/or a blocked polyisocyanate.

10. A process according to claim 9, characterised in that a cationic poly(meth)acrylate, polyester, polyurethane and/or polyurethane-urea resin is used which has a number average molecular weight (Mn) of 1000 to 100,000, an OH number of 0 to 450, an amine number of 20 to 200 and a glass transition temperature of -50° to +150°C.

11. A process according to any one of the preceding claims, characterised in that a covering lacquer or clear lacquer is used which contains
A) 40 to 80 % by weight of a cationic poly(meth)acrylate resin which is completely or partially neutralised with acids and which has a number average molecular weight (Mn) of 1000 to 100,000, an OH number of 60 to 200, an amine number of 30 to 150 and a glass transition temperature of -50° to +150°C, and
B) 60 to 20 % by weight of a blocked polyisocyanate containing at least two groups per molecule which are reactive towards the amino and/or OH groups of component A),
wherein the percentages by weight of components A) and B) are with respect to the solid resin in each case and add up to 100 % by weight.

12. The use of a lacquer based on cationic binder vehicles for the production of the outermost lacquer coat in multilayer coating.

13. The use of a lacquer based on the binder vehicle and hardener components as defined in claims 9 to 11 for the production of the outermost lacquer coat in the production of multilayer coatings.

## Revendications

1. Procédé pour réaliser un revêtement multicouche sur un substrat, caractérisé en ce que l'on réalise, comme couche la plus extérieure, une couche à base d'un vernis contenant un ou plusieurs liants cationiques.

2. Procédé selon la revendication 1, caractérisé en ce que l'on applique, comme couche la plus extérieure, une couche d'un vernis de finition constitué d'un vernis contenant un ou plusieurs liants cationiques, des pigments et éventuellement des matières de charge.

3. Procédé selon la revendication 2, caractérisé en ce que la couche de vernis de finition est appliquée sur une couche de fond éventuellement revêtue d'une matière de charge.

4. Procédé selon la revendication 1, caractérisée en ce que l'on applique, comme couche la plus extérieure, une couche d'un vernis transparent constitué d'un vernis transparent contenant un ou plusieurs liants cationiques.

5. Procédé selon la revendication 4, caractérisé en ce que le revêtement multicouche est réalisé en appliquant une couche d'un vernis de base sur un substrat à vernir, en évacuant l'air, en séchant ou en soumettant à une cuisson la couche de vernis de base et en appliquant une couche constituée d'un vernis transparent, puis en durcissant à une température augmentée après avoir éventuellement évacué l'air.

6. Procédé selon l'une des revendications 1 à 5, caractérisé en ce que l'on applique un vernis de finition aqueux ou un vernis transparent aqueux à base d'un liant cationique.

7. Procédé selon les revendications 4, 5 ou 6, caractérisé en ce que l'on applique un vernis transparent aqueux contenant un ou plusieurs pigments transparents, un agent de protection contre la lumière UV et/ou des additifs usuels dans les vernis transparents.

8. Procédé selon l'une des revendications 5, 6 ou 7 précédentes, caractérisé en ce que l'on utilise pour la réalisation de la couche de vernis de base un vernis de base aqueux.

9. Procédé selon l'une des revendications précédentes, caractérisé en ce que l'on utilise un vernis de finition ou un vernis transparent à base d'une résine de poly(méth)acrylate, d'une résine polyesters, d'une résine de polyuréthane et/ou de polyuréthaneurée cationique totalement ou partiellement neutralisée et d'un agent de réticulation à base d'une résine de condensation amine-formaldéhyde et/ou d'un polyisocyanate bloqué.

10. Procédé selon la revendication 9, caractérisé en ce que l'on utilise une résine de poly(méth)acrylate, une résine polyesters, une résine de polyuréthane et/ou de polyuréthaneurée cationique ayant une masse moléculaire moyenne en nombre (Mn) comprise entre 1 000 et 100 000, un indice OH compris entre 0 et 450, un indice d'amine compris entre 20 et 200 et une température de transition vitreuse comprise entre -50°C et +150°C.

11. Procédé selon l'une des revendications précédentes, caractérisé en ce que l'on utilise un vernis de finition ou un vernis transparent contenant
A) 40 à 80% en poids d'une résine de poly(méth)acrylate cationique totalement ou partiellement neutralisée avec des acides, présentant une masse moléculaire moyenne en nombre (Mn) comprise entre 1 000 et 100 000, un indice OH compris entre 60 et 200, un indice d'amine compris entre 30 et 150 et une température de transition vitreuse comprise entre -50°C et +150°C, et
B) 60 à 20% en poids d'un polyisocyanate bloqué présentant au moins deux groupes réactifs vis-à-vis des groupes amino et/ou OH du composant A par molécule,
les pourcent en poids des composants A et B se rapportant à la résine solide et leur somme étant égale à 100% en poids.

12. Utilisation d'un vernis à base de liants cationiques pour la réalisation de la couche de vernis la plus extérieure dans un revêtement multicouche.

13. Utilisation d'un vernis à base de liants et d'un composant durcisseur, tels que définis dans l'une des revendications 9 à 11, pour la réalisation de la couche de vernis la plus extérieure dans les revêtements multicouches.
